(19)

Europäisches
Patentamt
European
Patent Office
Office européen
des brevets

(11) **EP 4 303 239 A1**

(12) **EUROPEAN PATENT APPLICATION**
published in accordance with Art. 153(4) EPC

(43) Date of publication:
**10.01.2024 Bulletin 2024/02**

(21) Application number: **22763100.9**

(22) Date of filing: **24.02.2022**

(51) International Patent Classification (IPC):
***C08F 10/14*** (2006.01)     ***C08L 23/20*** (2006.01)
***C09D 123/20*** (2006.01)

(52) Cooperative Patent Classification (CPC):
**C08F 10/14; C08L 23/20; C09D 123/20;**
**Y02E 60/10**

(86) International application number:
**PCT/JP2022/007625**

(87) International publication number:
**WO 2022/186044 (09.09.2022 Gazette 2022/36)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **02.03.2021   JP 2021032478**
          **02.03.2021   JP 2021032479**

(71) Applicant: **Mitsui Chemicals, Inc.**
**Tokyo 104-0028 (JP)**

(72) Inventors:
• **ASANO, Akihiro**
  **Sodegaura-shi, Chiba 299-0265 (JP)**
• **TANAKA, Masakazu**
  **Sodegaura-shi, Chiba 299-0265 (JP)**
• **SASAKI, Toyoaki**
  **Sodegaura-shi, Chiba 299-0265 (JP)**
• **MIZOBUCHI, Yusuke**
  **Sodegaura-shi, Chiba 299-0265 (JP)**
• **IWATA, Takuya**
  **Kuga-gun, Yamaguchi 740-0061 (JP)**

(74) Representative: **Hoffmann Eitle**
**Patent- und Rechtsanwälte PartmbB**
**Arabellastraße 30**
**81925 München (DE)**

(54) **4-METHYL-1-PENTENE POLYMER**

(57)    To provide a 4-methyl-1-pentene polymer being excellent in storage stability when dissolved in a solvent and solubility, and being excellent in at least one of heat resistance, and a coating appearance when a coating film is stretched, for example, when such a film is bended or used in a flexible application.

A 4-methyl-1-pentene polymer (A) being a copolymer of 4-methyl-1-pentene and at least one selected from linear $\alpha$-olefins having 6 to 20 carbon atoms, the 4-methyl-1-pentene polymer (A) satisfying the following requirements (I) and (II):

(I) an endotherm end temperature (TmE) in a melting (endothermic) curve measured by DSC is 230°C or lower; and

(II) an exotherm start temperature (TcS) in a crystallization (exothermic) curve measured by DSC is 210°C or lower.

EP 4 303 239 A1

**Description**

Technical Field

The present invention relates to a 4-methyl-1-pentene polymer.

Background Art

For display devices, semiconductor devices, optical members, and printed circuit boards, for example, various coating agents are used for protection, insulation, flattening, heat resistance, light resistance, and weather resistance, for example. Films produced using these coating agents are required to have high heat resistance because such films are often subjected to processes exceeding 200°C, such as solder reflow and fine processing, in production of the above devices, for example. The films are additionally required to have properties such as transparency and electrical isolation depending on applications.
Particularly, films formed by using a coating agent on the electrode surface of a capacitor are required to have, in addition to heat resistance, high electrical insulation in order to prevent leakage of accumulated electricity and voltage drops.
In a pressing step of a circuit board such as a printed wiring board, a flexible printed wiring board, or a multilayer printed wiring board, a release film is used to prevent the circuit board from adhering to the backing plate. For example, in the case of a flexible printed wiring board, for protection of a predetermined circuit portion of a substrate (such as a polyimide film) having the circuit portion, the circuit portion is covered with an adhesive-backed resin film, and then a releasing film is layered thereon, followed by pressing (see, e.g., Patent Literature 1) .
With this background, there is a need for a coating agent that enables films having high heat resistance and electrical isolation to be formed, which films can be used as releasing films, for example. In response to the need, coating agents including an acrylic resin, a polycarbonate resin, a fluorine resin, a polyacetal resin, a polyester resin, a silicone resin, a polyethersulfone resin, a polyimide resin, a polyarylate resin, or a cyclic olefinic resin, for example, have been suggested, but formation of films having well-balanced heat resistance and electrical isolation has been failed.
In recent years, as a transparent resin for coating with excellent heat resistance and having a glass transition temperature of 200°C or higher, cyclic olefinic addition polymers having a silyl group(s) have been suggested (e.g., Patent Literatures 2 and 3). However, cyclic olefinic addition polymers, although having high heat resistance, are rigid and poor in flexibility, and are easy to break or crack when formed into films. Thus, during use thereof as a releasing film, for example, the film may be broken, and the electrical isolation may decrease. Moreover, a large number of silyl groups have been introduced therein, warping resulting from shrinkage during crosslinking is of concern, and there have been problems such as high water absorption and a high dielectric constant.
Examples are disclosed in which a composition obtained by dissolving a solvent-soluble 4-methyl-1-pentene copolymer having a low molecular weight (or a melting point of 200°C or lower) in a solvent, as a composition including a 4-methyl-1-pentene copolymer and a solvent, is used for coating (e.g., Patent Literatures 4 and 5).

Citation List

Patent Literature

Patent Literature 1: JP2004-339491A
Patent Literature 2: U.S. Patent No. 5912313
Patent Literature 3: JP2004-58339A
Patent Literature 4: JP2013-227421A
Patent Literature 5: JP2015-34258A

Summary of Invention

Technical Problem

The 4-methyl-1-pentene copolymer described in Patent Literature 4 has been shown to have excellent heat resistance, and the 4-methyl-1-pentene copolymer described in Patent Literature 5 has been shown to have excellent storage stability.
However, it has been found that, in applications requiring flexibility after application, toughness is insufficient in conventional arts, and after stretching, breaking or cracking may occur, resulting in degradation of the appearance.

Particularly in the electric device field and release applications, long life properties have been found to be necessary in view of flexibility and favorable appearances after coating and environmental burdens.

Further, 4-methyl-1-pentene copolymers are used in high-temperature processes or use environments depending on applications, and thus heat resistance has been found to be lacking in conventional arts. Particularly in the electric device field and release applications, it has been found that further heat resistance is required and long life properties is necessary in view of environmental burdens.

In view of such problems in conventional arts, an object of a first present invention is to provide a 4-methyl-1-pentene polymer that is excellent in storage stability when dissolved in a solvent and solubility and that is excellent in at least one of heat resistance and a coating appearance when a coating film is stretched, for example, when such a film is bended or used in a flexible application.

An object of a second present invention is to provide a 4-methyl-1-pentene polymer that is excellent in storage stability when dissolved in a solvent and solubility and that is excellent in a coating appearance when a coating film is stretched, for example, when such a film is bended or used in a flexible application.

Further, an object of a third present invention is to provide a 4-methyl-1-pentene polymer that is excellent in storage stability when dissolved in a solvent, heat resistance, and solubility.

Solution to Problem

The present inventors have intensively studied to solve the above problems and have found that the above problems can be solved by a specific 4-methyl-1-pentene polymer, having completed the present invention.

The first present invention relates to the following [1] .

[1] A 4-methyl-1-pentene polymer (A) being a copolymer of 4-methyl-1-pentene and at least one selected from linear $\alpha$-olefins having 6 to 20 carbon atoms, the 4-methyl-1-pentene polymer (A) satisfying the following requirements (I) and (II) :

(I) an endotherm end temperature (TmE) in a melting (endothermic) curve measured by DSC is 230°C or lower; and

(II) an exotherm start temperature (TcS) in a crystallization (exothermic) curve measured by DSC is 210°C or lower.

The second present invention relates to the following [2] and [3].

[2] The 4-methyl-1-pentene polymer (A) according to the [1] having a melting point (Tm) measured by DSC of 170 to 242°C.

[3] The 4-methyl-1-pentene polymer (A) according to the [1] or [2] having an intrinsic viscosity [η] of 1.7 to 5.5 dl/g. The third present invention relates to the following [4] .

[4] The 4-methyl-1-pentene polymer (A) according to the [1] having a melting point (Tm) measured by DSC of 200 to 242°C.

The first to third present inventions further relate to, for example, the following [5] to [9].

[5] The 4-methyl-1-pentene polymer (A) according to any of the [1] to [4], wherein an amount (U1) of constitutional units derived from 4-methyl-1-pentene is 84.0 to 100 mol%, and a total amount (U2) of constitutional units derived from at least one selected from linear $\alpha$-olefins having 6 to 20 carbon atoms is 16.0 to 0 mol%, provided that the sum of the U1 and the U2 is 100 mol%.

[6] The 4-methyl-1-pentene polymer (A) according to any of the [1] to [5], which is not modified.

[7] A composition (X) comprising 0.1 to 50% by mass of the 4-methyl-1-pentene polymer (A) according to any of the [1] to [6], and 50 to 99.9% by mass of a solvent (B).

[8] The composition (X) according to the [7], wherein the solvent (B) is an organic solvent.

[9] A coating agent comprising the composition (X) according to the [7] or [8].

Advantageous Effects of Invention

The 4-methyl-1-pentene polymer of the first present invention is excellent in storage stability when dissolved in a solvent and solubility, and is excellent in at least one of heat resistance and a coating appearance when a coating film is stretched, for example, when such a film is bended or used in a flexible application.

The 4-methyl-1-pentene polymer of the second present invention is excellent in storage stability when dissolved in a solvent and solubility and is excellent in a coating appearance when a coat film is stretched, for example, when such a film is bended or used in a flexible application.

The 4-methyl-1-pentene polymer of the third present invention is excellent in storage stability when dissolved in a solvent, heat resistance and solubility.

Description of Embodiments

<4-Methyl-1-pentene polymer>

The 4-methyl-1-pentene polymer (A) (hereinafter, this may also be referred to as the "polymer (A)") according to the first present invention is a copolymer of 4-methyl-1-pentene and at least one selected from linear $\alpha$-olefins having 6 to 20 carbon atoms, and satisfies the following requirements (I) to (II).

Examples of an aspect of polymer (A) according to the first present invention include the polymer (A) according to the second present invention and the polymer (A) according to the third present invention described below. The polymer (A) according to the present invention means the polymer (A) according to the first present invention encompassing the polymer (A) according to the second present invention and the polymer (A) according to the third present invention, unless otherwise indicated.

Examples of the linear $\alpha$-olefin having 6 to 20 carbon atoms include 1-hexene, 1-octene, 1-decene, 1-dodecene, 1-tetradecene, 1-hexadecene, 1-heptadecene, 1-octadecene, and 1-eicosene.

Requirement (I): The endotherm end temperature (TmE) in a melting (endothermic) curve measured by DSC is 230°C or lower.

The endotherm end temperature means a temperature at which melting ends. The endotherm end temperature and an exotherm start temperature described below are indexes different from onset and offset, generally mentioned, which are intersections of the baseline and a steady-state line tangent.

The endotherm end temperature (TmE) is preferably less than 230°C, more preferably 228°C or lower, and further preferably less than 228°C.

A polymer (A) according to the second present invention having a value of the endotherm end temperature (TmE) in the above range is preferable from the viewpoint of a coating appearance.

A polymer (A) according to the third present invention having a value of the endotherm end temperature (TmE) in the above range is preferable from the viewpoint of heat resistance. Accordingly, coating agents and the like obtained from a composition comprising the polymer (A) also have excellent heat resistance, and such coating agents and the like tend to have homogeneous properties.

The measurement method of the endotherm end temperature (TmE) will be described in detail in Examples.

Requirement (II):

The exotherm start temperature (TcS) in a crystallization (exothermic) curve measured by DSC is 210°C or lower. The exotherm start temperature means a temperature at which crystallization starts.

The exotherm start temperature (TcS) is preferably less than 210°C, more preferably 200°C or lower, and further preferably less than 200°C.

A polymer (A) according to the second present invention having a value of the exotherm start temperature (TcS) in the above range is preferable from the viewpoint of a coating appearance.

A polymer (A) according to the third present invention having a value of the exotherm start temperature (TcS) in the above range is preferable from the viewpoint of heat resistance. Accordingly, coating agents and the like obtained from a composition comprising the polymer (A) also have excellent heat resistance, and such coating agents and the like tend to have homogeneous properties.

The measurement method of the exotherm start temperature (TcS) will be described in detail in Examples.

The intrinsic viscosity [η] of the polymer (A) according to the second present invention measured in decalin of 135°C is normally 0.5 to 6.0 dl/g, preferably 1.7 to 5.5 dl/g, more preferably 1.8 to 5.3 dl/g, further preferably 2.0 to 5.3 dl/g, still further preferably 2.2 to 5.3 dl/g, and particularly preferably 2.2 to 5.2 dl/g.

A polymer (A) according to the second present invention having a value of the intrinsic viscosity [η] in the above range is preferable from the viewpoint of a coating appearance. When the intrinsic viscosity [η] is higher than 6.0 dl/g, a coating agent containing the polymer (A) is likely to aggregates or to be inhomogeneous on application of the coating agent.

The intrinsic viscosity [η] of the polymer (A) according to the third present invention measured in decalin of 135°C is normally 0.5 to 6.0 dl/g, preferably 1.7 to 5.3 dl/g, more preferably 1.7 to 4.5 dl/g, further preferably 1.7 to 3.5 dl/g, and still further preferably 1.7 to 2.5 dl/g.

A polymer (A) according to the third present invention having a value of the intrinsic viscosity [η] in the above range is preferable from the viewpoint of heat resistance.

The value of the intrinsic viscosity [η] can be adjusted by the amount of hydrogen to be added in the polymerization step on producing the polymer (A).

The measurement method of the intrinsic viscosity [η] will be described in detail in Examples.

The melting point (Tm) of the polymer (A) according to the second present invention, measured by DSC, is preferably 170 to 242°C, more preferably 170 to 232°C, and further preferably 170 to 220°C.

A polymer (A) according to the second present invention having a value of the melting point (Tm) in the above range is preferable from the viewpoint of a coating appearance.

The melting point (Tm) of the polymer (A) according to the third present invention, measured by DSC, is 200 to 242°C, preferably 200 to 232°C, more preferably higher than 200°C and 232°C or lower, and further preferably higher than 200°C and 220°C or lower.

A polymer (A) according to the third present invention having a value of the melting point (Tm) in the above range is preferable in order to improve the heat resistance of the coating after removal of the solvent.

The value of the melting point (Tm) tends to depend on the stereoregularity of the polymer and the content of the α-olefin structural unit contained in the polymer. Accordingly, the melting point (Tm) can be adjusted by using a catalyst for olefin polymerization described below and further controlling the content of the α-olefin structural unit.

The measurement method of the melting point (Tm) will be described in detail in Examples.

Conventional 4-methyl-1-pentene polymers are difficult to dissolve in a solvent without use of a technique such as lowering the melting point, reducing the molecular weight, or modifying such a polymer, and use of such polymers in a coating agent, for example, has been problematic. As disclosed in Patent Literature 4, there is a technique for using a 4-methyl-1-pentene polymer having a melting point lowered by limiting the comonomer type and increasing the comonomer content, as a coating agent. However, with this technique, the intrinsic viscosity [η] is low, and thus the stretchability and coating appearance after coating deteriorate. Also with this technique, the melting point is limited to a region of 200°C or lower, and the heat resistance is insufficient depending on applications.

For the polymer (A) of the second present invention, as described above, preferably, the melting point and the intrinsic viscosity [η] are balanced by keeping the melting point relatively high and making the intrinsic viscosity [η] high to suppress crystallization slightly, and then a composition capable of providing a stretchable coating agent (also referred to as varnish) can be achieved. In other words, the comonomer content can be adjusted so as to lower the temperature at which the crystallization starts and the temperature at which the crystals completely dissolves as much as possible. This enables the coating appearance and solubility that meet the purpose to be achieved. Within this composition range, the storage stability when dissolved in a solvent is also ensured.

For the polymer (A) of the third present invention, as described above, a composition that enables varnish to be provided has been achieved by suppressing crystallization slightly while keeping a high melting point of 200°C or higher. In other words, the comonomer content has been adjusted so as to make the melting point Tm 200°C or higher and lower the temperature at which the crystallization starts and the temperature at which the crystals completely dissolves as much as possible. This has enabled the heat resistance and solubility that meet the purpose to be achieved. Within this composition range, the storage stability when dissolved in a solvent is also ensured.

The polymer (A) may be modified, or may not be modified. The polymer (A) can be dissolved in a solvent even if it is not modified, and thus the above purpose can be achieved. The polymer (A) may be an entirely-unmodified polymer or may be a partially-unmodified polymer.

The polymer (A) includes constitutional units derived from 4-methyl-1-pentene and constitutional units derived from at least one selected from linear α-olefins having 6 to 20 carbon atoms.

The amount (U1) of the constitutional units derived from 4-methyl-1-pentene is preferably 84.0 to 100 mol%, more preferably 90.0 to 99.0 mol%, and further preferably 94.0 to 98.5 mol%, in the second present invention, particularly preferably 94.0 to 98.0 mol%, and in the third present invention, particularly preferably 94.5 to 98.0 mol%. The total amount (U2) of the constitutional units derived from at least one selected from linear α-olefins having 6 to 20 carbon atoms is preferably 16.0 to 0 mol%, more preferably 10.0 to 1.0 mol%, and further preferably 6.0 to 1.5 mol%, in the second present invention, particularly preferably 6.0 to 2.0 mol%, and in the third present invention, particularly preferably 5.5 to 2.0 mol%. In the above, U1 and U2 in total is 100 mol%.

A polymer (A) in which U1 and U2 are in the above range is preferable from the viewpoint of heat resistance.

As the linear α-olefins having 6 to 20 carbon atoms, linear α-olefins having 6 to 18 carbon atoms are preferable from the viewpoint of a coating appearance in the second present invention and from the viewpoint of heat resistance in the third present invention. Specifically, 1-hexene, 1-octene, 1-decene, 1-dodecene, 1-tetradecene, 1-hexadecene, 1-heptadecene, and 1-octadecene, for example, are preferable, and of these, 1-decene, 1-hexadecene, and 1-octadecene are preferable.

The linear α-olefins having 6 to 20 carbon atoms may be used singly or in combination of two or more.

The polymer (A) may include structural units derived from other polymerizable compounds as long as the object of the present invention is not impaired. Examples of such other polymerizable compounds include vinyl compounds having a cyclic structure such as styrene, vinylcyclopentene, vinylcyclohexane and vinylnorbornane; vinyl esters such as vinyl acetate; unsaturated organic acids such as maleic anhydride or derivatives thereof; conjugated dienes such as butadiene, isoprene, pentadiene, and 2,3-dimethylbutadiene; and non-conjugated polyenes such as 1,4-hexadiene, 1,6-octadiene, 2-methyl-1,5-hexadiene, 6-methyl-1,5-heptadiene, 7-methyl-1,6-octadiene, dicyclopentadiene, cyclohexadiene, dicyclooctadiene, methylenenorbornene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, and 2-propenyl-2,2-norbornadiene.

The polymer (A) may contain such units derived from other polymerizable compounds in an amount of 10 mol% or less, preferably 5 mol% or less, and more preferably 3 mol% or less per 100 mol% in total of all the structural units derived from polymerizable compounds included in the polymer (A).

The measurement method of the contents of the constitutional units derived from 4-methyl-1-pentene and the constitutional units derived from at least one selected from linear $\alpha$-olefins having 6 to 20 carbon atoms in the polymer (A) will be described in detail in Examples.

The density of the polymer (A) is preferably 820 to 850 (kg/m$^3$), more preferably 825 to 850 kg/m$^3$, further preferably 825 to 845 kg/m$^3$, and particularly preferably 825 to 840 kg/m$^3$. The value of the density of the polymer (A) can be adjusted by selecting the type and content of other olefins to be copolymerized with 4-methyl-1-pentene. The density can be measured in accordance with JIS K6268. A polymer (A) having a value of the density in the above range is preferable from the viewpoint of a coating appearance.

The molecular weight distribution (Mw/Mn), which is a ratio between the weight average molecular weight (Mw) and the number average molecular weight (Mn) of the polymer (A) measured by gel permeation chromatography (GPC), is preferably 1.0 to 3.5, more preferably 1.3 to 3.0, and further preferably 1.5 to 2.5.

The value of the molecular weight distribution (Mw/Mn) can be adjusted by the type of a catalyst for olefin polymerization described below, particularly a metallocene catalyst. The molecular weight distribution (Mw/Mn) can be measured using a gel permeation chromatograph, Alliance GPC-2000 model, manufactured by Waters Corporation.

A polymer (A) having a value of the molecular weight distribution (Mw/Mn) in the above range is preferable from the viewpoint of transparency and mechanical characteristics. When the molecular weight distribution of the polymer (A) is in the above range, affinity with the solvent described below is enhanced, and the stability of the composition is improved.

The crystallization temperature (Tc) of the polymer (A) measured by DSC is preferably 110 to 220°C and further preferably 120 to 205°C.

The value of the crystallization temperature (Tc) tends to depend on the stereoregularity of the polymer and the content of the structural units of the linear $\alpha$-olefins having 6 to 20 carbon atoms, and can be adjusted by using a catalyst for olefin polymerization described later and further controlling the content of the structural units of the linear $\alpha$-olefins having 6 to 20 carbon atoms. A polymer (A) having a value of the crystallization temperature (Tc) in the above range is preferable from the viewpoint of moldability.

The polymer (A) can be obtained by polymerizing 4-methyl-1-pentene, the specific olefin(s) described above, and if necessary, the other polymerizable compounds in the presence of a catalyst for olefin polymerization by a known method.

Examples of an aspect of a preferable catalyst of the catalyst for olefin polymerization described above can include metallocene catalysts. Examples of preferable metallocene catalyst include metallocene catalysts described in patent literature WO01/53369, WO01/27124, JPH3-193796, JPH02-41303, or WO06/025540.

<Composition>

The composition (X) of the present invention includes the 4-methyl-1-pentene polymer (A) and the solvent (B).

The content of the polymer (A) in the composition (X) is 0.1 to 50% by mass, preferably 0.5 to 30% by mass, more preferably 1.0 to 25% by mass, and further preferably 5 to 20% by mass. The content of the solvent (B) in the composition (X) is 50 to 99.9% by mass, preferably 70 to 99.5% by mass, more preferably 75 to 99.0% by mass, and further preferably 80 to 95% by mass.

When the contents of the polymer (A) and the solvent (B) in the composition (X) are in the above ranges, the composition (X), when used as a coating agent or the like, will achieve a good balance between the handleability and the ease of removing the solvent on producing a film from the coating agent.

The solvents (B) are not particularly limited as long as being able to dissolve the polymer (A). Of these, organic solvents can be preferably used. Examples of the solvent (B) include aliphatic hydrocarbons such as n-hexane, n-heptane, n-octane, cyclohexane, methylcyclohexane, and ethylcyclohexane; and aromatic hydrocarbons such as toluene and xylene. Of these, toluene, cyclohexane, and methylcyclohexane, for example, can be preferably used.

The composition (X) may further contain, if needed, an antioxidant, a heat-resistant stabilizer, a weather-resistant stabilizer, an antistatic agent, a slip agent, a leveling agent, an enhancer, an antiblocking agent, an antifog agent, a lubricant, a dye, a pigment, a natural oil, a synthetic oil, a wax, a filler, or the like, as long as the object of the present invention is not impaired.

As the antioxidant, a known antioxidant can be used. Specifically, a hindered phenol compound, a sulfur-based antioxidant, a lactone-based antioxidant, an organophosphite compound, and an organophosphonite compound, or a combination of several types of these can be used.

Examples of the lubricant include sodium, calcium, or magnesium salts of saturated or unsaturated fatty acids such as lauric acid, palmitic acid, oleic acid, and stearic acid, and these can be used singly or in mixture of two or more of these. The amount of the lubricant to be blended is desirably usually 0.1 to 3 parts by mass and preferably about 0.1 to 2 parts by mass based on 100 parts by mass of the composition.

As the slip agent, an amide of saturated or unsaturated fatty acids such as lauric acid, palmitic acid, oleic acid, stearic acid, erucic acid, and behenic acid, or a bisamide of these saturated or unsaturated fatty acids is preferably used. Of these, erucamide and ethylene bis stearamide are particularly preferable. These fatty acid amides are preferably blended in a range of 0.01 to 5 parts by mass based on 100 parts by mass of polymer (A).

Examples of the antiblocking agent include micropowder silica, micropowder aluminum oxide, micropowder clay, powder or liquid silicone resin, tetrafluoroethylene resin, micropowder crosslinked resin such as crosslinked acrylic or methacrylic resin powder. Of these, micropowder silica and crosslinked acrylic or methacrylic resin powder is preferable.

As described below, when the composition (X) is used as a coating agent, adding a leveling agent to the composition (X) is also a preferable aspect. As a leveling agent for reducing surface roughness of a film produced with the composition (X), a fluorine-based nonionic surfactant, a special acrylic resin-based leveling agent, or a silicone-based leveling agent, for example, can be used, and one having a good compatibility with the solvent is preferable. The amount of the leveling agent to be added is used in a range of 1 to 50,000 ppm with respect to the polymer (A) in the composition (X).

As the enhancer, 5 to 50 parts by mass of an oxide of a metal such as silicon, titanium, aluminum, or zirconium, a polyfunctional alkoxy compound or an oligomer thereof, or a clay mineral can be blended based on 100 parts by mass of the polymer (A) in the composition (X), and the hardness and elastic modulus of a film produced using the composition (X) as the coating agent (the film is also referred to as a coat layer in this case) can be enhanced. When the amount of the enhancer to be added is less than 5 parts by mass, the effect is excessively low, and when the amount exceeds 50 parts by mass, the transparency or mechanical strength of the coat layer may be impaired.

The method for producing the composition (X) is not particularly limited, and the composition (X) can be produced by a method usually used. For example, the compound (X) can be produced by adding the polymer (A) to the solvent (B), followed by stirring at a temperature equal to or lower than the melting point of the solvent (B) for a predetermined time.

The polymer (A) according to the first present invention is excellent in storage stability when dissolved in a solvent and solubility. The polymer (A) according to the second present invention is excellent in storage stability when dissolved in a solvent and solubility and is excellent in a coating appearance when a coating film is stretched, for example, when such a film is bended or used in a flexible application. The polymer (A) according to the third present invention is excellent in storage stability when dissolved in a solvent, heat resistance, and solubility. Further, any of the polymers (A) has characteristics such as releasability, stretchability, electrical isolation, and chemical resistance, generally specific to 4-methyl-1-pentene polymers. For this reason, the composition (X) containing the polymer (A) may be applied to various applications.

The composition (X) enables a film having high heat resistance to be produced, and thus can be preferably used as coating agents, particularly various coating agents for surface protection, insulation, flattening, heat resistance, light resistance, weather resistance, or the like, on various display devices such as liquid crystal display elements and electroluminescent display elements; semiconductor devices; optical members such as light guide plates, polarizing films, light diffusing films, retardation films, and antireflective films; and print circuit boards, for example.

Applying the composition (X) on an object to be coated and drying the applied composition (X) enables a thin film to be obtained.

Particularly, the composition (X) can form a protective layer on a boards having a complex shape and thus can be preferably used as coating agents for forming a protective layer on printed wiring boards or the electrode surface of capacitors. Applying the composition (X) on another film and removing the solvent enables the another film to be a releasing film.

Examples

Hereinafter, the present invention will be described in more detail with reference to Examples. However, the present invention is not limited by these Examples.

[Methods for measuring various physical properties]

[Contents of constitutional units in 4-methyl-1-pentene polymer]

The amount of constitutional units derived from 4-methyl-1-pentene (4-methyl-1-pentene content) and the amount of constitutional units derived from the $\alpha$-olefin other than 4-methyl-1-pentene ($\alpha$-olefin content) were calculated from the $^{13}$C-NMR spectrum using the following apparatus and conditions.
The measurement was performed using a nuclear magnetic resonance apparatus, ECP500 model manufactured by JEOL Ltd., under the following conditions: solvent: a mixed solvent of o-dichlorobenzene/hexadeuterobenzene (80/20% by volume); sample concentration: 55 mg/0.6 mL; measurement temperature: 120°C; observed nucleus: 13C (125 MHz); sequence: single-pulse proton decoupling; pulse width: 4.7 $\mu$s (45° pulse); repetition time: 5.5 s; number of scans: 10,000 or more; and chemical shift reference value: 27.50 ppm. From the obtained $^{13}$C-NMR spectrum, the compositions of 4-methyl-1-pentene, and the $\alpha$-olefin were quantified.

[Intrinsic viscosity ($\eta$)]

The intrinsic viscosity [$\eta$] was measured using a decalin solvent at 135°C. That is, about 20 mg of polymerized powder, pellets, or resin mass was dissolved in 15 ml of decalin, and the specific viscosity $\eta$sp was measured in an oil bath at 135°C. 5 ml of a decalin solvent was added to this decalin solution for dilution, and then the specific viscosity $\eta$sp was measured in the same manner. This dilution operation was further repeated two times, and the value of $\eta$sp/C when the concentration (C) was extrapolated to zero was determined as the intrinsic viscosity (see the expression below).

$$[\eta] = \lim(\eta sp/C) \quad (C \to 0)$$

[Melting point (Tm), crystallization temperature (Tc), endotherm end temperature (TmE), and exotherm start temperature (TcS)]

A DSC measuring equipment (DSC220C) manufactured by Seiko Instruments Inc. was used to determine exothermic and endothermic curves in accordance with ASTM D3418, and the melting point (Tm) and the crystallization temperature (Tc) were determined as follows.
About 5 mg of a sample was packed in an aluminum pan for measurement, the temperature was raised from 20°C to 280°C at a heating rate of 10°C/minute, the sample was retained at 280°C for 5 minutes. Then, the temperature was lowered to 20°C at a cooling rate of 10°C/minute, the sample was retained at 20°C for 5 minutes, and then the temperature was raised again from 20°C to 280°C at a heating rate of 10°C/minute. The crystallization peak that appeared on the first temperature lowering was taken as the crystallization temperature (Tc). When a plurality of peaks were detected, one with the highest temperature was taken as the crystallization temperature (Tc). The melting peak that appeared on the second temperature raising was taken as the melting point (Tm). When a plurality of peaks were detected, one with the highest temperature was taken as the melting point (Tm).
The temperature at which endotherm ended on the melting (endothermic) curve was taken as the endotherm end temperature (TmE). The temperature at which exotherm started on the crystallization (exothermic) curve was taken as the exotherm start temperature (TcS).
The start point and end point are, with respect to a baseline where amounts of heat becomes constant at the start or end of the endotherm or exotherm, points at which the curve deviates from the baseline and the difference between the amounts of heat can be confirmed to begin.

[Storage stability]

In production of the composition described below, the polymer and the solvent were placed in a vessel equipped with a stirrer and stirred at 90°C and 200 rpm for 1 hour to dissolve the polymer, followed by storing at room temperature for 24 hours. Thereafter, the composition was visually evaluated under visible light. A case in which the composition was transparent was designated as A, a case in which the composition appeared clouded but fluidity was observed was designated as B, and a case in which the composition appeared clouded and fluidity was not observed was designated as C in Table 1.

[Measurement of water contact angle]

DropMaster500 image processing-type solid-liquid interface analysis system was used to measure the contact angle value when a water droplet was dropped on each film obtained in Examples and Comparative Examples. A larger contact angle value means that the hydrophobicity is higher and the releasability to high-polar materials is higher.

[Normalized dielectric breakdown voltage]

A dielectric breakdown tester manufactured by Yamayo Shikenki Co., Ltd. was used in accordance with ASTM-D149. The dielectric breakdown voltage (BVD) was measured by applying a voltage at a voltage increase rate of 500 V/sec on each film obtained in Examples and Comparative Examples to determine withstand voltage characteristics. The thickness of a location near the dielectric breakdown point of the film of which the dielectric breakdown voltage had been measured was measured, and the value obtained by dividing the dielectric breakdown voltage by the thickness was taken as the normalized dielectric breakdown voltage (kV/$\mu$m). A larger normalized dielectric breakdown voltage indicates higher electrical isolation.

[Coating appearance]

A film obtained by applying each composition obtained in Examples and Comparative Examples on a PET board was cut into a size of 5 mm $\times$ 1 mm, the cut film was stretched by 50% at a rate of 10mm/min using a tensile test (5982 manufactured by INSTRON) at room temperature, and the coat film of the composition was observed with a microscope (VK-X100 manufactured by KEYENCE CORPORATION). The presence of cracking was evaluated, and a case of no cracking was designated as A and a case in which cracking was present was designated as B in Table 1.

[Coating heat resistance]

Each film obtained in Examples and Comparative Examples was cut into a 50-mm square, and the cut film was placed on a hot plate heated to 200°C, and the change in the shape thereof was observed. A case in which the change ratio of the length of the side having the largest change in the length during 10 seconds is 10% or less is designated as A, a case in which the change ratio is 10 to 20% is designated as B, and a case in which the change ratio is 20% or more or a case in which obvious melting was observed in the film is designated as C in Table 1.

[Synthesis Example 1]

(8-Octamethylfluorene-12'-yl-(2-(adamantan-1-yl)-8-methyl-3,3b,4,5,6,7,7a,8-octahydrocyclopenta[a]indene))zirconium dichloride was synthesized in accordance with the method described in Preliminary Experiment 5 in patent literature WO2014/123212.

[Synthesis Example 2]

Production of olefin polymerization catalyst

At 30°C, to a 200 mL three-necked flask equipped with a stirrer and sufficiently purged with nitrogen, 30 mL of purified decane and 14.65 mmol, in terms of aluminum atom, of particulate solid polymethylaluminoxane having a D50 of 28 $\mu$m and having an aluminum atom content of 43% by mass (synthesized by the method described in patent literature WO2014/123212, hereinafter, also referred to as "solid MAO") were loaded under a nitrogen stream to give a suspension. To the suspension, 50.0 mg (0.0586 mmol) of the transition metal compound described in Synthesis Example 1 (8-octamethylfluorene-12'-yl-(2-(adamantan-1-yl)-8-methyl-3,3b,4,5,6,7,7a,8-octahydrocyclopenta[a]indene))zirconium dichloride as a 4.58 mmol/L solution in toluene was added with stirring. The stirring was terminated after 1 hour, the resulting mixture was washed with 100 mL of decane by a decantation method, and then decane was added to give a slurry liquid of 50 mL (ratio of Zr supported: 98%).

[Synthesis Example 3]

Preparation of prepolymerization catalyst component

To the slurry liquid prepared in Synthesis Example 2, 1.0 mL of a solution of triisobutylaluminum in decane (0.5 mmol/mL in terms of aluminum atom) was loaded at 25°C under a nitrogen stream. After cooling to 15°C, 10 mL of 4-methyl-1-pentene was loaded into the reactor over 60 minute. The loading onset time point was taken as the initiation of prepolymerization. The stirring was terminated 2.0 hours after the initiation of the polymerization, and the resulting mixture was washed with 100 mL of decane 3 times by a decantation method. The prepolymerization catalyst component was made into a decane slurry (9.5 g/L, 0.56 mmol-Zr/L).

[Example 1]

(Production of polymer 1)

To a 1 L internal volume SUS polymerization reactor equipped with a stirrer, 425 mL of purified decane was loaded at room temperature under a nitrogen stream and heated to 40°C. After 40°C was reached, 0.8 mL (0.4 mmol in terms of aluminum atom) of a solution of triisobutylaluminum in decane (0.5 mmol/mL in terms of aluminum atom) was loaded, and then 0.002 mmol, in terms of zirconium atom, of the previously-prepared decane slurry of the prepolymerization catalyst component of Synthesis Example 3 was loaded. 16.25 NmL of hydrogen was loaded, and then a mixed solution of 234 mL of 4-methyl-1-pentene and 18.5 mL of a mixture of $\alpha$-olefins having 16 carbon atoms/18 carbon atoms (trade name; LINEALENE 168, manufactured by Idemitsu Kosan Co., Ltd.) was continuously loaded into the polymerization reactor at a constant rate over 2 hours. This loading onset time point was taken as the initiation of the polymerization, and the mixture was retained at 45°C for 4.5 hours. Each at 1 hour and 2 hours after the initiation of the polymerization, 16.25 NmL of hydrogen was loaded. After 4.5 hours passed from the initiation of the polymerization, the mixture was cooled to room temperature, and the polymerization reactor was depressurized, and then the polymerization solution containing a white solid was immediately filtered to obtain a solid substance. This solid substance was dried under reduced pressure at 80°C for 8 hours to obtain a polymer 1. The yield was 124 g. The content of 4-methyl-1-pentene was 97.5 mol%, and the content of the $\alpha$-olefins (1-hexadecene and 1-octadecene) was 2.5 mol% in the polymer 1. The polymer 1 had a melting point (Tm) of 205°C and an intrinsic viscosity [$\eta$] of 5.1 dl/g.

[Example 2]

(Production of polymer 2)

To a 1 L internal volume SUS polymerization reactor equipped with a stirrer, 425 mL of purified decane was loaded at room temperature under a nitrogen stream and cooled to 10°C. After 10°C was reached, 0.8 mL (0.4 mmol in terms of aluminum atom) of a solution of triisobutylaluminum in decane (0.5 mmol/mL in terms of aluminum atom) was loaded, and then 0.006 mmol, in terms of zirconium atom, of the previously-prepared decane slurry of the prepolymerization catalyst component of Synthesis Example 3 was loaded. 22.5 NmL of hydrogen was loaded, and then a mixed solution of 219 mL of 4-methyl-1-pentene and 33.0 mL of a mixture of $\alpha$-olefins having 16 carbon atoms/18 carbon atoms (trade name; LINEALENE 168, manufactured by Idemitsu Kosan Co., Ltd.) was continuously loaded into the polymerization reactor at a constant rate over 2 hours. This loading onset time point was taken as the initiation of the polymerization, and the mixture was retained at 10°C for 4.5 hours. Each at 1 hour and 2 hours after the initiation of the polymerization, 22.5 NmL of hydrogen was loaded. After 4.5 hours passed from the initiation of the polymerization, the polymerization reactor was depressurized, and then the polymerization solution containing a white solid was immediately filtered to obtain a solid substance. This solid substance was dried under reduced pressure at 80°C for 8 hours to obtain a polymer 2. The yield was 162 g. The content of 4-methyl-1-pentene was 94.3 mol% and the content of the $\alpha$-olefins (1-hexadecene and 1-octadecene) was 5.7 mol% in the polymer 2. The polymer 2 had a melting point (Tm) of 184°C and an intrinsic viscosity [$\eta$] of 4.4 dl/g.

[Example 3]

(Production of polymer 3)

To a 1 L internal volume SUS polymerization reactor equipped with a stirrer, 425 mL of purified heptane, 69 mL of 4-methyl-1-pentene, and 5.1 mL of LINEALENE 168 (manufactured by Idemitsu Kosan Co., Ltd.) were loaded at room temperature under a nitrogen stream and heated to 40°C. 0.43 mL (0.43 mmol in terms of aluminum atom) of a solution of triisobutylaluminum in toluene (1.0 mmol/mL in terms of aluminum atom) was loaded. Then, 2.67 mL of a toluene solution containing 0.189 mmol of methylaluminoxane and 0.00063 mmol of (8-octamethylfluorene-12'-yl-(2-(adamantan-1-yl)-8-methyl-3,3b,4,5,6,7,7a,8-octahydrocyclopenta[a]indene))zirconium dichloride) prepared in advance was loaded. Then, 31.25 NmL of hydrogen was loaded to initiate polymerization. This loading onset time point was taken as the initiation of the polymerization, and the mixture was retained at 45°C for 90 minutes. After 90 minutes passed from the initiation of the polymerization, the polymerization reactor was depressurized, and then the mixture was exposed to air to terminate the polymerization. The reaction solution was charged into acetone including hydrochloric acid added to precipitate the total amount of polymer. After stirring, the solution was filtered through filter paper to obtain a solid substance. This solid substance was dried under reduced pressure at 80°C for 8 hours to obtain a polymer 3. The yield was 35 g. The content of 4-methyl-1-pentene was 96.7 mol% and the content of the α-olefins (1-hexadecene and 1-octadecene was) 3.3 mol% in the polymer 3. The polymer 3 had a melting point (Tm) of 199°C and an intrinsic viscosity [η] of 3.4 dl/g.

[Example 4]

(Production of polymer 4)

Into a fully nitrogen-substituted SUS polymerization reactor with stirring blades having a capacity of 1.5 L, 500 mL of 4-methyl-1-pentene and 230 mL of heptane were loaded at 23°C. To this autoclave, 20 mL of LINEALENE 168 (manufactured by Idemitsu Kosan Co., Ltd.) and 0.3 mL of a solution of 1.0 mmol/mL triisobutylaluminum (TIBAL) in toluene were sequentially loaded, and stirring was started. Then, 140 mL of hydrogen was loaded, and the autoclave was heated to an internal temperature of 60°C. 2 mL of a toluene solution containing 0.033 mmol of methylaluminoxane in terms of Al and 0.00011 mmol of (8-octamethylfluorene-12'-yl-(2-(adamantan-1-yl)-8-methyl-3,3b,4,5,6,7,7a,8-octahydrocyclopenta[a]indene))zirconium dichloride, which had been prepared in advance, was injected into the autoclave under pressure with nitrogen to initiate polymerization. The temperature was adjusted so that the internal temperature of the autoclave was 60°C during the polymerization reaction. 13 minutes after the initiation of the polymerization, 5 mL of methanol was injected under pressure with nitrogen into the autoclave to terminate the polymerization, and the autoclave was depressurized to atmospheric pressure. The reaction solution was poured into acetone while stirring to precipitate a polymer. The obtained polymer containing the solvent was dried at 130°C under reduced pressure for 10 hours. The obtained polymer 4 weighed 68.4 g, and the content of 4-methyl-1-pentene was 97.6 mol% and the content of the α-olefins (1-hexadecene and 1-octadecene) was 2.4 mol% in the polymer 4. The polymer 4 had a melting point (Tm) of 207°C and an intrinsic viscosity [η] of 2.4 dl/g.

[Example 5]

(Production of polymer 5)

Into a fully nitrogen-substituted SUS polymerization reactor with stirring blades having a capacity of 1.5 L, 500 mL of 4-methyl-1-pentene and 210 mL of heptane were charged at 23°C. To this autoclave, 45 mL of LINEALENE 168 (manufactured by Idemitsu Kosan Co., Ltd.) and 0.3 mL of a solution of 1.0 mmol/mL triisobutylaluminum (TIBAL) in toluene were sequentially loaded, and stirring was started. Then, 140 mL of hydrogen was loaded, and the autoclave was heated to an internal temperature of 60°C. 2 mL of a toluene solution containing 0.033 mmol of methylaluminoxane in terms of Al and 0.00011 mmol of (8-octamethylfluorene-12'-yl-(2-(adamantan-1-yl)-8-methyl-3,3b,4,5,6,7,7a,8-octahydrocyclopenta[a]indene))zirconium dichloride, which had been prepared in advance, was injected under pressure with nitrogen into the autoclave to initiate polymerization. The temperature was adjusted so that the internal temperature of the autoclave was 60°C during the polymerization reaction. 13 minutes after the initiation of the polymerization, 5 mL of methanol was injected under pressure with nitrogen into the autoclave to terminate the polymerization, and the autoclave was depressurized to atmospheric pressure. The reaction solution was poured into acetone while stirring to precipitate a polymer.
The polymer containing the obtained solvent was dried at 130°C under reduced pressure for 10 hours. The obtained polymer 5 weighed 68.6 g, and the content of 4-methyl-1-pentene was 94.6 mol% and the content of the α-olefins (1-hexadecene and 1-octadecene) was 5.4 mol% in the polymer 5. The polymer 5 had a melting point (Tm) of 173°C and an intrinsic viscosity [η] of 2.4 dl/g.

[Example 6]

(Production of polymer 6)

Into a fully nitrogen-substituted SUS polymerization reactor with stirring blades having a capacity of 1.5 L, 500 mL of 4-methyl-1-pentene and 220 mL of heptane were loaded at 23°C. To this autoclave, 30 mL of 1-decene and 0.3 mL of a solution of 1.0 mmol/mL triisobutylaluminum (TIBAL) in toluene were sequentially loaded, and stirring was started. Then, 140 mL of hydrogen was loaded, and the autoclave was heated to an internal temperature of 60°C. 2 mL of a toluene solution containing 0.039 mmol of methylaluminoxane in terms of Al and 0.00013 mmol of (8-octamethylfluorene-12'-yl-(2-(adamantan-1-yl)-8-methyl-3,3b,4,5,6,7,7a,8-octahydrocyclopenta[a]indene))zirconium dichloride, which had been prepared in advance, were injected into the autoclave under pressure with nitrogen to initiate polymerization. The temperature was adjusted so that the internal temperature of the autoclave was 60°C during the polymerization reaction. 10 minutes after the initiation of the polymerization, 5 mL of methanol was injected under pressure with nitrogen into the autoclave to terminate the polymerization, and the autoclave was depressurized to atmospheric pressure. The reaction solution was poured into Acetone while stirring to precipitate a polymer. The polymer containing the obtained solvent was dried at 130°C under reduced pressure for 10 hours. The obtained polymer 6 weighed 66.5 g, the content of 4-methyl-1-pentene was 94.1 mol% and the content of α-olefin (1-decene content) was 5.9 mol% in the polymer 6. The polymer 6 had a melting point (Tm) of 190°C and an intrinsic viscosity [η] of 2.3 dl/g.

[Example 7]

(Production of polymer 7)

Into a fully nitrogen-substituted SUS polymerization reactor with stirring blades having a capacity of 1.5 L, 500 mL of 4-methyl-1-pentene and 230 mL of heptane were loaded at 23°C. To this autoclave, 15 mL of 1-decene and 0.3 mL of a solution of 1.0 mmol/mL triisobutylaluminum (TIBAL) in toluene were sequentially loaded, and stirring was started. Then, 140 mL of hydrogen was loaded, and the autoclave was heated to an internal temperature of 60°C. 2 mL of a toluene solution containing 0.06 mmol of methylaluminoxane in terms of Al and 0.0002 mmol of (8-octamethylfluorene-12'-yl-(2-(adamantan-1-yl)-8-methyl-3,3b,4,5,6,7,7a,8-octahydrocyclopenta[a]indene))zirconium dichloride, which had been prepared in advance, was injected under pressure with nitrogen into the autoclave to initiate polymerization. The temperature was adjusted so that the internal temperature of the autoclave was 60°C during the polymerization reaction. 30 minutes after the initiation of the polymerization, 5 ml of methanol was injected under pressure with nitrogen into the autoclave to terminate the polymerization, and the autoclave was depressurized to atmospheric pressure. The reaction solution was poured into Acetone while stirring to precipitate a polymer. The polymer containing the obtained solvent was dried at 130°C under reduced pressure for 10 hours. The obtained polymer 7 weighed 35.6 g, the content of 4-methyl-1-pentene was 96.7 mol% and the content of the α-olefin (1-decene content) was 3.3 mol% in the polymer 7. The polymer 7 had a melting point (Tm) of 212°C and an intrinsic viscosity [η] of 2.3 dl/g.

[Example 8]

(Production of polymer 8)

To a 1 L internal volume SUS polymerization reactor equipped with a stirrer, 425 mL of purified decane was loaded at room temperature under a nitrogen stream and heated to 40°C. After 40°C was reached, 0.8 mL (0.4 mmol in terms of aluminum atom) of a solution of triisobutylaluminum in decane (0.5 mmol/mL in terms of aluminum atom) was loaded, and then 0.00075 mmol, in terms of zirconium atom, of the previously-prepared decane slurry of the prepolymerization catalyst component of Synthesis Example 3 was loaded. 35 NmL of hydrogen was loaded, and then a mixed solution of 238 mL of 4-methyl-1-pentene and 13.6 mL of 1-decene was continuously loaded at a constant rate into the polymerization reactor over 2 hours. This loading onset time point was taken as the initiation of the polymerization, and the mixture was retained at 45°C for 4.5 hours. Each at 1 hour and 2 hours after the initiation of the polymerization, 35 NmL of hydrogen was loaded. After 4.5 hours passed from the initiation of the polymerization, the mixture was cooled to room temperature, and the pressure was released. The polymerization solution containing a white solid was immediately filtered to obtain a solid substance. This solid substance was dried under reduced pressure at 80°C for 8 hours to obtain a polymer 8. The yield was 154 g. The content of 4-methyl-1-pentene was 96.2 mol% and the content of the α-olefin (1-decene content) was 3.8 mol% in the polymer 8. The polymer 8 had a melting point (Tm) of 207°C and an intrinsic viscosity [η] of 2.2 dl/g.

[Example 9]

(Production of polymer 9)

To a 1 L internal volume SUS polymerization reactor equipped with a stirrer, 425 mL of purified decane was loaded at room temperature under a nitrogen stream and heated to 40°C. After 40°C was reached, 0.8 mL (0.4 mmol in terms of aluminum atom) of a solution of triisobutylaluminum (TIBAL) in decane (0.5 mmol/mL in terms of aluminum atom) was loaded, and then 0.0020 mmol, in terms of zirconium atom, of the decane slurry of the prepolymerization catalyst component of Synthesis Example 3 was loaded. 16.25 NmL of hydrogen was loaded, and then a mixed liquid of 231 mL of 4-methyl-1-pentene and 20.6 mL of LINEALENE 168 (manufactured by Idemitsu Kosan Co., Ltd., a mixture of 1-hexadecene and 1-octadecene) was continuously loaded at a constant rate into the polymerization reactor over 2 hours. The loading onset time point of the mixed liquid was taken as the initiation of the polymerization, and the mixed liquid was retained at 45°C for 4.5 hours. Each at 1 hour and 2 hours after the initiation of the polymerization, 16.25 NmL of hydrogen was loaded. After 4.5 hours passed from the initiation of the polymerization, the mixture was cooled to room temperature, and the pressure was released. The polymerization solution containing a white solid was immediately filtered to obtain a solid substance. This solid substance was dried under reduced pressure at 80°C for 8 hours to obtain a polymer 9. The yield was 128 g. The content of 4-methyl-1-pentene was 97.0 mol% and the content of the α-olefins (1-hexadecene and 1-octadecene) was 3.0 mol% in the polymer 9. The polymer 9 had a melting point (Tm) of 203°C and an intrinsic viscosity [η] of 5.3 dl/g.

[Example 10]

(Production of polymer 10)

To a 1 L internal volume SUS polymerization reactor equipped with a stirrer, 425 mL of purified decane was loaded at room temperature under a nitrogen stream and heated to 40°C. After 40°C was reached, 0.8 mL (0.4 mmol in terms of aluminum atom) of a solution of triisobutylaluminum (TIBAL) in decane (0.5 mmol/mL in terms of aluminum atom) was loaded, and then 0.00175 mmol, in terms of zirconium atom, of the decane slurry of the prepolymerization catalyst component of Synthesis Example 3 was loaded. 23.75 NmL of hydrogen was loaded, and then a mixed liquid of 232 mL of 4-methyl-1-pentene and 19.6 mL of LINEALENE 168 (manufactured by Idemitsu Kosan Co., Ltd., a mixture of 1-hexadecene and 1-octadecene) was continuously loaded at a constant rate into the polymerization reactor over 2 hours. The loading onset time point of the mixed liquid was taken as the initiation of the polymerization, and the mixed liquid was retained at 45°C for 4.5 hours. Each at 1 hour and 2 hours after the initiation of the polymerization, 23.75 NmL of hydrogen was loaded. After 4.5 hours passed from the initiation of the polymerization, the mixture was cooled to room temperature, and the pressure was released. The polymerization solution containing a white solid was immediately filtered to obtain a solid substance. This solid substance was dried under reduced pressure at 80°C for 8 hours to obtain a polymer 10. The yield was 146 g. The content of 4-methyl-1-pentene was 96.7 mol% and the content of the α-olefins (1-hexadecene and 1-octadecene) was 3.3 mol% in the polymer 10. The polymer 10 had a melting point (Tm) of 203°C and an intrinsic viscosity [η] of 4.0 dl/g.

[Example 11]

(Production of polymer 11)

To a 1 L internal volume SUS polymerization reactor equipped with a stirrer, 425 mL of purified decane was loaded at room temperature under a nitrogen stream and heated to 40°C. After 40°C was reached, 0.8 mL (0.4 mmol in terms of aluminum atom) of a solution of triisobutylaluminum (TIBAL) in decane (0.5 mmol/mL in terms of aluminum atom) was loaded, and then 0.00175 mmol, in terms of zirconium atom, of the decane slurry of the prepolymerization catalyst component of Synthesis Example 3 was loaded. 23.75 NmL of hydrogen was loaded, and then a mixed liquid of 230 mL of 4-methyl-1-pentene and 22.4 mL of LINEALENE 168 (manufactured by Idemitsu Kosan Co., Ltd., a mixture of 1-hexadecene and 1-octadecene) was continuously loaded at a constant rate into the polymerization reactor over 2 hours. The loading onset time point of the mixed liquid was taken as the initiation of the polymerization, and the mixed liquid was retained at 45°C for 4.5 hours. Each at 1 hour and 2 hours after the initiation of the polymerization, 23.75 NmL of hydrogen was loaded. After 4.5 hours passed from the initiation of the polymerization, the mixture was cooled to room temperature, and the pressure was released. The polymerization solution containing a white solid was immediately filtered to obtain a solid substance. This solid substance was dried under reduced pressure at 80°C for 8 hours to obtain a polymer 11. The yield was 142 g. The content of 4-methyl-1-pentene was 96.5 mol% and the content of the α-olefins (1-hexadecene and 1-octadecene) was 3.5 mol% in the polymer 11. The polymer 11 had a melting point (Tm) of 201°C and an intrinsic viscosity [η] of 4.2 dl/g.

[Example 12]

(Production of polymer 12)

The polymer 9 obtained in Example 9 (100 parts by mass), 2 parts by mass of maleic anhydride, and 0.02 parts by mass of 2,5-dimethyl-2,5-bis(t-butylperoxy)hexyne-3 (PERHEXYNE 25B manufactured by NOF Corporation) as an organic peroxide were blended, and kneaded at a resin temperature of 280°C and a screw rotation speed of 150 rpm using a Labo Plastomill mixer manufactured by Toyo Seiki Seisaku-sho, Ltd. to obtain a polymer 12. The amount of the constitutional units in the polymer 12 was deemed to be the same as that in the polymer 9. The polymer 12 had a melting point (Tm) of 203°C, an intrinsic viscosity [η] of 0.8 dl/g, and an amount of grafting of 1.5% by mass.

[Example 13]

(Production of polymer 13)

Production was conducted in the same manner as for the polymer 12 to obtain a polymer 13 except that the polymer 10 was used instead of the polymer 9.

The amount of the constitutional units in the polymer 13 was deemed to be the same as that in the polymer 10. The polymer 13 had a melting point (Tm) of 203°C, an intrinsic viscosity [η] of 0.9dl/g, and an amount of grafting of 1.6% by mass.

[Example 14]

(Production of polymer 14)

Production was conducted in the same manner as for the polymer 12 to obtain a polymer 14 except that the polymer 11 was used instead of the polymer 9.

The amount of the constitutional units in the polymer 14 was deemed to be the same as that in the polymer 11. The polymer 14 had a melting point (Tm) of 201°C, an intrinsic viscosity [η] of 0.9 dl/g, and an amount of grafting of 1.5% by mass.

[Example 15]

(Production of polymer 15)

The polymer 9 obtained in Example 9 (100 parts by mass), 1 part by mass of maleic anhydride, and 0.01 parts by mass of 2,5-dimethyl-2,5-bis(t-butylperoxy)hexyne-3 (PERHEXYNE 25B manufactured by NOF Corporation) as an organic peroxide were blended, and kneaded at a resin temperature of 230°C and a screw rotation speed of 130 rpm using a Labo Plastomill mixer manufactured by Toyo Seiki Seisaku-sho, Ltd. to obtain a polymer 15. The amount of the constitutional units in the polymer 15 was deemed to be the same as that in the polymer 9. The polymer 15 had a melting point (Tm) of 203°C, an intrinsic viscosity [η] of 2.4 dl/g, and an amount of grafting of 0.6% by mass.

[Comparative Example 1]

(Production of polymer 16)

Into a fully nitrogen-substituted SUS polymerization reactor with stirring blades having a capacity of 1.5 L, 750 mL of 4-methyl-1-pentene was loaded at 23°C. The autoclave was charged with 0.75 ml of a 1.0 mmol/ml toluene solution of triisobutylaluminum (TIBAL) and the stirrer was turned.

The autoclave was then heated to an internal temperature of 60°C and pressurized with propylene to a total pressure of 0.15 MPa (gauge pressure). Subsequently, 0.34 ml of a toluene solution containing 1 mmol of methylaluminoxane in terms of Al and 0.003 mmol of diphenylmethylene (1-ethyl-3-t-butyl-cyclopentadienyl) (2,7-di-t-butyl-fluorenyl) zirconium dichloride, which had been prepared in advance, was injected under pressure with nitrogen into an autoclave to initiate polymerization. The temperature was adjusted so that the internal temperature of the autoclave was 60°C during the polymerization reaction. 5 minutes after the initiation of the polymerization, 5 ml of methanol was injected under pressure with nitrogen into the autoclave to terminate the polymerization, and the autoclave was depressurized to atmospheric pressure. Acetone was poured into the reaction solution while stirring. The powdery polymer containing the obtained solvent was dried at 130°C under reduced pressure for 12 hours. The obtained polymer 16 weighed 19.9g, and the 4-methyl-1-pentene content was 92.0 mol% and the propylene content was 8.0 mol% in the polymer 16. The polymer 16 had a melting point Tm of 180°C and an intrinsic viscosity [η] of 1.6 dl/g.

[Comparative Example 2]

(Production of polymer 17)

The proportions of 4-methyl-1-pentene, other α-olefins (an equal mass mixture of 1-hexadecene and 1-octadecene), and hydrogen were changed in accordance with the polymerization method described in Comparative Example 9 of patent literature WO2006/054613 to thereby obtain a 4-methyl-1-pentene-based polymer described in Table 1 (polymer 17).

[Example 16]

To 10 g of the polymer 1, 0.1 wt% tri(2,4-di-t-butylphenyl)phosphate as an antioxidant and 0.1 wt% n-octadecyl-3-(4'-hydroxy-3',5'-di-t-butylphenyl)propionate as a heat-resistant stabilizer were added, methylcyclohexane (manufactured by Wako Pure Chemical Industries, Ltd.) was added thereto so as to achieve a solid content concentration of 5 wt%, and the mixture was stirred at 90°C and 200 rpm for 1 hour to produce a composition containing the polymer 1. This composition was applied on a glass board at 25°C, uniformly spread with an applicator, and then dried at 25°C for 30 minutes and further at 80°C for 10 minutes to obtain a film.

Additionally, for evaluation of the coating appearance, the composition was applied on a PET ("Lumirror" manufactured by Toray Industries, Inc.) board at 25°C, uniformly spread with an applicator, and then dried at 25°C for 30 minutes and further at 80°C for 10 minutes to obtain a coating film.

[Example 17]

The same operation as in Example 16 was conducted to obtain a composition, a film, and a coating film except that the polymer 2 was used instead of the polymer 1.

[Example 18]

The same operation as in Example 16 was conducted to obtain a composition, a film, and a coating film except that the polymer 3 was used instead of the polymer 1.

[Example 19]

The same operation as in Example 16 was conducted to obtain a composition, a film, and a coating film except that the polymer 4 was used instead of the polymer 1.

[Example 20]

The same operation as in Example 16 was conducted to obtain a composition, a film, and a coating film except that the polymer 5 was used instead of the polymer 1.

[Example 21]

The same operation as in Example 16 was conducted to obtain a composition, a film, and a coating film except that the polymer 6 was used instead of the polymer 1.

[Example 22]

The same operation as in Example 16 was conducted to obtain a composition, a film, and a coating film except that the polymer 7 was used instead of the polymer 1.

[Example 23]

The same operation as in Example 16 was conducted to obtain a composition, a film, and a coating film except that the polymer 8 was used instead of the polymer 1.

[Example 24]

The same operation as in Example 16 was conducted to obtain a composition, a film, and a coating film except that the polymer 9 was used instead of the polymer 1.

[Example 25]

The same operation as in Example 16 was conducted to obtain a composition, a film, and a coating film except that the polymer 10 was used instead of the polymer 1.

[Example 26]

The same operation as in Example 16 was conducted to obtain a composition, a film, and a coating film except that the polymer 11 was used instead of the polymer 1.

[Example 27]

The same operation as in Example 16 was conducted to obtain a composition, a film, and a coating film except that the polymer 12 was used instead of the polymer 1.

[Example 28]

The same operation as in Example 16 was conducted to obtain a composition, a film, and a coating film except that the polymer 13 was used instead of the polymer 1.

[Example 29]

The same operation as in Example 16 was conducted to obtain a composition, a film, and a coating film except that the polymer 14 was used instead of the polymer 1.

[Example 30]

The same operation as in Example 16 was conducted to obtain a composition, a film, and a coating film except that the polymer 15 was used instead of the polymer 1.

[Comparative Example 3]

The same operation as in Example 16 was conducted to obtain a composition, a film, and a coating film except that the polymer 16 was used instead of the polymer 1.

[Comparative Example 4]

The polymer 17 was used instead of the polymer 1, and stirring was conducted at 90°C and 200 rpm for 1 hour as in Example 16, but the polymer 17 was not substantially dissolved, remaining undissolved. As described above, a solution having a concentration sufficient for coating formation could not be obtained, and thus the composition, film, and coating film could not be obtained.

The compositions and physical properties of the polymers and the physical properties of the compositions, films, and coating films of Examples 1 to 30 and Comparative Examples of 1 to 4 are shown in Table 1. In Comparative Example 4, the composition, film, and coating film could not be obtained, and thus the storage stability, water contact angle, normalized dielectric breakdown voltage, and coating appearance could not be evaluated.

Table 1

|  |  |  | Ex. 1 | Ex. 2 | Ex. 3 | Ex. 4 |
|---|---|---|---|---|---|---|
|  |  |  | Ex. 16 | Ex. 17 | Ex. 18 | Ex. 19 |
|  |  |  | Polymer 1 | Polymer 2 | Polymer 3 | Polymer 4 |
| Polymer | Amount of 4-methyl-1-pentene | mol% | 97.5 | 94.3 | 96.7 | 97.6 |
|  | Comonomer type |  | 1-Hexadecene 1-Octadecene | 1-Hexadecene 1-Octadecene | 1-Hexadecene 1-Octadecene | 1-Hexadecene 1-Octadecene |
|  | Amount of comonomer | mol% | 2.5 | 5.7 | 3.3 | 2.4 |
|  | Intrinsic viscosity [η] | dl/g | 5.1 | 4.4 | 3.4 | 2.4 |
|  | Tm | °C | 205 | 184 | 199 | 207 |
|  | TmE | °C | 225 | 210 | 211 | 222 |
|  | Tc | °C | 163 | 138 | 162 | 173 |
|  | TcS | °C | 192 | 160 | 185 | 187 |
| Composition Film Coating film | Storage stability |  | A | A | A | A |
|  | Water contact angle | ° | 99.3 | 99.3 | 99.3 | 99.3 |
|  | Normalized dielectric breakdown voltage | kV/μm | 1.39 | 1.35 | 1.38 | 1.39 |
|  | Coating appearance |  | A | A | A | A |
|  | Coating heat resistance |  | A | B | B | A |
|  |  |  | Ex. 5 | Ex. 6 | Ex. 7 | Ex. 8 |
|  |  |  | Ex. 20 | Ex. 21 | Ex. 22 | Ex. 23 |
|  |  |  | Polymer 5 | Polymer 6 | Polymer 7 | Polymer 8 |
| Polymer | Amount of 4-methyl-1-pentene | mol% | 94.6 | 94.1 | 96.7 | 96.2 |
|  | Comonomer type |  | 1-Hexadecene 1-Octadecene | 1-Decene | 1-Decene | 1-Decene |
|  | Amount of comonomer | mol% | 5.4 | 5.9 | 3.3 | 3.8 |
|  | Intrinsic viscosity [η] | dl/g | 2.4 | 2.3 | 2.3 | 2.2 |
|  | Tm | °C | 173 | 190 | 212 | 207 |
|  | TmE | °C | 194 | 208 | 227 | 222 |
|  | Tc | °C | 124 | 164 | 186 | 172 |
|  | TcS | °C | 146 | 179 | 196 | 192 |

(continued)

|  |  |  | Ex. 5 | Ex. 6 | Ex. 7 | Ex. 8 |
|---|---|---|---|---|---|---|
|  |  |  | Ex. 20 | Ex. 21 | Ex. 22 | Ex. 23 |
|  |  |  | Polymer 5 | Polymer 6 | Polymer 7 | Polymer 8 |
| Composition Film Coating film | Storage stability |  | A | A | B | B |
|  | Water contact angle | ° | 99.2 | 99.1 | 99.3 | 99.2 |
|  | Normalized dielectric breakdown voltage | kV/μm | 1.39 | 1.35 | 1.42 | 1.41 |
|  | Coating appearance |  | A | A | A | A |
|  | Coating heat resistance |  | B | B | A | A |
|  |  |  | Ex. 9 | Ex. 10 | Ex. 11 | Ex. 12 |
|  |  |  | Ex. 24 | Ex. 25 | Ex. 26 | Ex. 27 |
|  |  |  | Polymer 9 | Polymer 10 | Polymer 11 | Polymer 12 |
| Polymer | Amount of 4-methyl-1-pentene | mol% | 97.0 | 96.7 | 96.5 | 97.0 |
|  | Comonomer type |  | 1-Hexadecene 1-Octadecene | 1-Hexadecene 1-Octadecene | 1-Hexadecene 1-Octadecene | 1-Hexadecene 1-Octadecene |
|  | Amount of comonomer | mol% | 3.0 | 3.3 | 3.5 | 3.0 |
|  | Intrinsic viscosity [η] | dl/g | 5.3 | 4.0 | 4.2 | 0.8 |
|  | Tm | °C | 203 | 203 | 201 | 203 |
|  | TmE | °C | 215 | 214 | 213 | 213 |
|  | Tc | °C | 159 | 159 | 154 | 174 |
|  | TcS | °C | 175 | 175 | 169 | 185 |
| Composition Film Coating film | Storage stability |  | A | A | A | A |
|  | Water contact angle | ° | 99.3 | 99.3 | 99.3 | 99.3 |
|  | Normalized dielectric breakdown voltage | kV/μm | 1.39 | 1.39 | 1.38 | 1.35 |
|  | Coating appearance |  | A | A | A | B |
|  | Coating heat resistance |  | A | A | A | A |

(continued)

| | | | Ex. 13 | Ex. 14 | Ex. 15 |
|---|---|---|---|---|---|
| | | | Ex. 28 | Ex. 29 | Ex. 30 |
| | | | Polymer 13 | Polymer 14 | Polymer 15 |
| Polymer | Amount of 4-methyl-1-pentene | mol% | 96.7 | 96.5 | 97.0 |
| | Comonomer type | | 1-Hexadecene 1-Octadecene | 1-Hexadecene 1-Octadecene | 1-Hexadecene 1-Octadecene |
| | Amount of comonomer | mol% | 3.3 | 3.5 | 3.0 |
| | Intrinsic viscosity [η] | dl/g | 0.9 | 0.9 | 2.4 |
| | Tm | °C | 203 | 201 | 203 |
| | TmE | °C | 212 | 211 | 214 |
| | Tc | °C | 171 | 170 | 175 |
| | TcS | °C | 176 | 180 | 186 |
| Composition Film Coating film | Storage stability | | A | A | A |
| | Water contact angle | ° | 99.3 | 99.3 | 99.3 |
| | Normalized dielectric breakdown voltage | kV/μm | 1.35 | 1.35 | 1.39 |
| | Coating appearance | | B | B | A |
| | Coating heat resistance | | A | A | A |

| | | | Comp. Ex. 1 | Comp. Ex. 2 | |
|---|---|---|---|---|---|
| | | | Comp. Ex. 3 | Comp. Ex. 4 | |
| | | | Polymer 16 | Polymer 17 | |
| Polymer | Amount of 4-methyl-1-pentene | mol% | 92.0 | 97.2 | |
| | Comonomer type | | Propylene | 1-Hexadecene 1-Octadecene | |
| | Amount of comonomer | mol% | 8.0 | 2.8 | |
| | Intrinsic viscosity [η] | dl/g | 1.6 | 2.4 | |
| | Tm | °C | 180 | 224 | |
| | TmE | °C | 193 | 240 | |
| | Tc | °C | 139 | 207 | |
| | TcS | °C | 159 | 214 | |

(continued)

|  |  |  | Comp. Ex. 1 | Comp. Ex. 2 |
|---|---|---|---|---|
|  |  |  | Comp. Ex. 3 | Comp. Ex. 4 |
|  |  |  | Polymer 16 | Polymer 17 |
| Composition Film Coating film | Storage stability |  | A | Not evaluable |
|  | Water contact angle | ° | 99.4 | Not evaluable |
|  | Normalized dielectric breakdown voltage | kV/ μm | 1.40 | Not evaluable |
|  | Coating appearance |  | B | Not evaluable |
|  | Coating heat resistance |  | B | Not evaluable |

The amount of solvent contained in each film obtained in Examples 16 to 30 and Comparative Examples 3 to 4 was 0.001 to 0.2% by mass based on 100% by mass of the film.

**Claims**

1.  A 4-methyl-1-pentene polymer (A) being a copolymer of 4-methyl-1-pentene and at least one selected from linear α-olefins having 6 to 20 carbon atoms, the 4-methyl-1-pentene polymer (A) satisfying the following requirements (I) and (II) :

    (I) an endotherm end temperature (TmE) in a melting (endothermic) curve measured by DSC is 230°C or lower; and
    (II) an exotherm start temperature (TcS) in a crystallization (exothermic) curve measured by DSC is 210°C or lower.

2.  The 4-methyl-1-pentene polymer (A) according to claim 1 having a melting point (Tm) measured by DSC of 170 to 242°C.

3.  The 4-methyl-1-pentene polymer (A) according to claim 1 or 2 having an intrinsic viscosity [η] of 1.7 to 5.5 dl/g.

4.  The 4-methyl-1-pentene polymer (A) according to claim 1 having a melting point (Tm) measured by DSC of 200 to 242°C.

5.   The 4-methyl-1-pentene polymer (A) according to any one of claims 1 to 4, wherein an amount (U1) of constitutional units derived from 4-methyl-1-pentene is 84.0 to 100 mol%, and a total amount (U2) of constitutional units derived from at least one selected from linear α-olefins having 6 to 20 carbon atoms is 16.0 to 0 mol%, provided that a sum of the U1 and the U2 is 100 mol%.

6.  The 4-methyl-1-pentene polymer (A) according to any one of claims 1 to 5, which is not modified.

7.  A composition (X) comprising 0.1 to 50% by mass of the 4-methyl-1-pentene polymer (A) according to any one of claims 1 to 6, and 50 to 99.9% by mass of a solvent (B).

8.  The composition (X) according to claim 7, wherein the solvent (B) is an organic solvent.

9.  A coating agent comprising the composition (X) according to claim 7 or 8.

## INTERNATIONAL SEARCH REPORT

International application No.

**PCT/JP2022/007625**

### A. CLASSIFICATION OF SUBJECT MATTER

*C08F 10/14*(2006.01)i; *C08L 23/20*(2006.01)i; *C09D 123/20*(2006.01)i
FI:   C08F10/14; C08L23/20; C09D123/20

According to International Patent Classification (IPC) or to both national classification and IPC

### B. FIELDS SEARCHED

Minimum documentation searched (classification system followed by classification symbols)

C08F6/00-246/00; 301/00; C08L23/20; C09D123/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2018-162408 A (MITSUI CHEMICALS INC.) 18 October 2018 (2018-10-18) claim 1, paragraphs [0180], [0181], [0203]-[0205], [0224], table 1, production example 9 | 1-9 |
| X | WO 2014/050817 A1 (MITSUI CHEMICALS INC.) 03 April 2014 (2014-04-03) claims 1, 10, 12, paragraphs [0254], [0272], [0345]-[0356], [0402]-[0404], [0413], table 5, synthesis example 4, example 5C | 1-9 |
| A | JP 2013-227421 A (MITSUI CHEMICALS INC.) 07 November 2013 (2013-11-07) entire text | 1-9 |
| A | WO 2019/198694 A1 (MITSUI CHEMICALS INC.) 17 October 2019 (2019-10-17) entire text | 1-9 |
| A | JP 2020-105446 A (MITSUI CHEMICALS INC.) 09 July 2020 (2020-07-09) entire text | 1-9 |
| A | JP 2015-034258 A (MITSUI CHEMICALS INC.) 19 February 2015 (2015-02-19) entire text | 1-9 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **22 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/007625**

| Patent document cited in search report | | | Publication date (day/month/year) | Patent family member(s) | Publication date (day/month/year) |
|---|---|---|---|---|---|
| JP | 2018-162408 | A | 18 October 2018 | (Family: none) | |
| WO | 2014/050817 | A1 | 03 April 2014 | US 2015/0239996 A1 claims 1, 10, 12, paragraphs [0615], [0632], [0633], [0752]-[0767], [0822]-[0824], table 5, synthesis example 4, example 5C US 2016/0376385 A1 US 2017/0327610 A1 US 2017/0327611 A1 EP 2902419 A1 CN 104662050 A KR 10-2015-0053797 A SG 11201502288T A TW 201422657 A TW 201802129 A | |
| JP | 2013-227421 | A | 07 November 2013 | (Family: none) | |
| WO | 2019/198694 | A1 | 17 October 2019 | US 2021/0032397 A1 entire text EP 3778667 A1 CN 111954685 A KR 10-2020-0135999 A SG 11202009998S A TW 201945408 A | |
| JP | 2020-105446 | A | 09 July 2020 | (Family: none) | |
| JP | 2015-034258 | A | 19 February 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004339491 A
- US 5912313 A
- JP 2004058339 A
- JP 2013227421 A
- JP 2015034258 A
- WO 0153369 A
- WO 0127124 A
- JP H3193796 B
- JP H0241303 B
- WO 06025540 A
- WO 2014123212 A
- WO 2006054613 A